# EUROPEAN PATENT APPLICATION

(11) **EP 2 460 691 A1**
(43) Date of publication of application: **06.06.2012**
(21) Application number: 11009382.0
(22) Date of filing: 25.11.2011
(51) Int. Cl.: B60R 9/048, B60R 9/045

(54) **A vehicle roof rack**

(30) Priority: 02.12.2010 GB 201020435; 30.09.2011 US 541377 P; 30.09.2011 GB 201116835
(71) Applicant: MCD Solutions (Tyrone) Ltd, Dungannon BT71 5BY (IE)
(72) Inventor: Campbell, Declan, Dungannon BT715BY Northern Ireland (IE); Conway, Martin, Dungannon BT71 6ET Northern Ireland (IE)
(74) Representative: Hanna, John Philip

(57) **Abstract**

An arrangement for adjusting and securing a load to the roof of a vehicle, the arrangement being operable by a single person and comprising an elongate load adjusting and securing arrangement having a first end and a second end mountable on a vehicle. One end of the elongate load adjusting and securing arrangement having a first load stop end (5, 6). A movable clamp (10) is movably mounted on the load carrying member, the movable clamp having a connecting member for connecting a towing device to the movable clamp, The load adjusting and securing arrangement having a device for moving the clamp along the load carrying member via the towing means.

## Description

The present invention relates to a vehicle roof rack and in particular to a roof rack for a van.

It is often necessary to transport oversized components from one location to another and roof racks are designed specifically for transporting these types of components on the roof of a vehicle. The oversized components are often too long to fit in the space available in the transporting vehicle such as planks of wood or metal/steel rods. Another common problem is that one dimension of the component is too big to pass through the available door or boot opening of the transporting vehicle such as bicycles for example. In the event where it is not possible to place the component in the space available in the car or van and where it is not possible to connect a trailer because no trailer is available or because the vehicle has no tow bar for example, the oversized component must be mounted on a roof rack.

Traditional roof racks for cars and vans are usually provided by a pair of u-shaped side rails mounted laterally along opposing edges of the car or van above the doors with at least two spaced apart cross bars traversing the roof of the vehicle between the side rails. Oversized objects are then lifted onto the roof rack and physically positioned and tied to the roof rack. The positioning of the objects in a safe location on the roof rack can be difficult often involving the operator having to climb up onto the roof or at least using a set of steps to allow them proper access to the objects on the roof rack, particularly if the objects are heavy.

Upstands or cleats are often provided on the side rails to provide support members to tie the oversized objects to, securing them to the roof rack and preventing the oversized objects from sliding laterally off the roof rack in transit. However, with heavy objects being transported it can often be difficult in practice to maneuver the oversized object against the support members to be tied, especially if the person moving the objects is by themselves. In view of the fact that quite heavy objects can be tied to the roof of vehicles moving at fairly high speeds in areas with other vehicles and/or pedestrians, a lot of responsibility is placed on the person tying these oversized objects to the roof rack. The tying procedure is often rushed and carried out using bits of rope or whatever material is to hand in the van or at the builders' merchants. This is not ideal considering the potential risk of damage to vehicles or injury to passersby as a result of the likes of scaffolding planks flying off the roof rack of a moving van.

It is an object of the present invention to obviate or mitigate the problem of moving the oversized objects once located on the roof rack and securely fixing these objects to the roof rack when they have been correctly positioned on the rack.

Accordingly, the present Invention provides an arrangement for adjusting and securing a load to the roof of a vehicle, the arrangement being operable by a single person and comprising an elongate load adjusting and securing means having a first end and a second end mountable on a vehicle, one end of the elongate load adjusting and securing means comprising a first load stop end, the elongate load adjusting and securing means comprising a load carrying member extending between the two ends, a movable clamp movably mounted on the load carrying member, the movable clamp having connecting means for connecting towing means to the movable clamp, the load adjusting and securing means having means for moving the clamp along the load carrying member via the towing means.

Preferably, the movable clamp is freely movably mounted on the load carrying member. By freely, we mean that any pressure applied to the clamp causes the clamp to move along the load carrying member.

Ideally, the load carrying member having means for conveying a movable clamp laterally along the length of the load carrying member.

Preferably, a first end of the elongate load securing means comprising a first load stop end and a second end of the elongate load securing means comprising a second load stop end.

Ideally, at least one load stop end having means for conveying a towing means. Preferably, the load carrying member is a load carrying bar.

Ideally, the towing means is provided by a strap, rope, cable or belt or any suitable elongate flexible means for coupling to the clamp. Advantageously, the towing means is easily tied, fastened or passed through the clamp to allow an operator to initially manually pull the clamp and subsequently to attach it to a mechanical arrangement for applying higher forces to the towing means.

Ideally, the clamp moving means facilitates the load being moved and clamped between the movable clamp and a stop end.

Advantageously, the clamp is freely movable laterally along the bar so that the load can be clamped without any further mechanical adjustment other than simply pulling on the end of the strap which is coupled to the clamp.

Ideally, two of the arrangements for adjusting and securing a load onto a roof are spaced apart on the roof to support the load off the roof of the vehicle.

Ideally, the means for moving the clamp along the load carrying bar is a ratchet means fixed to at least one load stop end. Advantageously, the mechanical advantage provided by the ratchet allows heavy loads to be moved into a transport position by single users.

Preferably, ratchet means are fixed to both load stop ends. Advantageously, this allows on operator to pull one load to one side of the load carrying bar whilst allowing a second load to be pulled to the other side of the load carrying bar to be securely clamped between clamp and the load stop end.

Advantageously, the combination of a load stop end and the movable clamp with the strapping attached between the movable clamp and the ratchet allows a load to be pulled along the bar until it is secured between the movable clamp and either load stop end. The load can be pulled to either side of the bar and a very heavy load can be pulled by a single user across the roof of the vehicle by the ratchet means.

Ideally, the movable clamp is fixed on the load carrying bar against vertical movement.

In one embodiment, a pair of movable clamps are movably mounted on the load carrying bar.

Preferably, the means for conveying the movable clamp along the load carrying bar is provided by a channel running longitudinally along the length of the bar.

Ideally, the movable clamp has wheel means formed for running along the bottom of the channel.

Preferably, the movable clamp is fixed within the channel of the load carrying bar against vertical movement. Advantageously, any force applied to the movable clamp will cause the clamp to move laterally in the channel.

Ideally, the load stop ends comprise a plate having a main plane substantially perpendicular to the longitudinal axis of the elongate load carrying bar.

Preferably, a plate has a groove opening out of a top edge of the plate, the groove being dimensioned for slidably guiding a length of towing means.

Ideally, the ratchet means is fixed proximal to at least one plate.

Preferably, the ratchet means is fixed proximal to at least one groove.

Ideally, the stop end has coupling means for mechanically coupling the elongate load carrying bar thereto.

Preferably, the coupling means comprises a pair of tongues protruding in the same direction from the main plane of a load stop end. Advantageously, the coupling means helps with locating the elongate load carrying bar in position on the load stop end.

Preferably, the load stop end has a groove opening out of a top edge of the load stop end, the groove being dimensioned for slidably guiding a length Of towing means.

Ideally, the coupling means protrudes from both lateral edges of the groove proximal to the closed end of the groove.

Preferably, the tongues are generally triangular formations. Advantageously, the tongue formations are cut out of the sheet of material forming the load stop end. The formations are bent out of the main plane of the sheet along connecting portions about the lateral edges of the groove.

Ideally, the tongues are a similar shape and size.

Preferably, the tongues have apertures formed there through for receiving fasteners for mechanically coupling the end of the load carrying bar to the load stop end.

Ideally, the tongues are inverted.

Preferably, the triangular tongues are inverted. Advantageously, the inversion of the triangular tongues allows the wheels of the movable clamp to slide into and out of the load carrying bar through the load stop end as the non overlapping portions of the triangular formations allow a small amount of lateral movement of the wheels as they pass through the mutually opposing non overlapping triangular formations, otherwise the wheels stick in this reduced width channel.

A further advantage of the inverted tongues/formations is that a greater diameter of aperture can be formed in the material of each formation when it is in the shape of a triangle. Advantageously, this allows a larger diameter fastener to be used further enhancing the strength and rigidity of the mechanical coupling between load carrying bar and load stop end and which also prevents the load carrying bar from rocking about.

Ideally, the load stop end has a slot formation formed for receiving and locating a protruding quick attach and release coupling member provided on the clamp moving means.

Preferably, a slot formation in the load stop end having an expanded portion at one end and a stud fastened to the ratchet having an expanded head are used.

Preferably, the slot formation comprises a pair of spaced apart apertures connected by a slot, Advantageously, the expanded head of the stud can only pass through the larger aperture with the shaft of the stud being dimensioned to slide along the slot between the two apertures.

Ideally, the smaller aperture of the slot formation is located below the groove so as to locate the ratchet centrally of the groove. Advantageously, the ratchet can be quickly mounted and released from the load stop end. Furthermore the smaller aperture allows the stud with the expanded head sufficient play relative to the load stop end so as to allow the ratchet to align itself correctly into position on the load stop end when an operator commences to apply force to the load via the ratchet mechanism.

Ideally, the expanded head being dimensioned so as to only fit through the expanded portion of the slot.

In use, the expanded head of the stud is normally in engagement with the side of the load stop end that the protrusions extend from with the ratchet urged into contact with the load end stop plate to secure the ratchet onto the plate. During assembly or disassembly of the ratchet, the stud is slidable relative to the slot so that the expanded head of the stud is brought into and away from alignment with the extended end of the slot to allow the ratchet to be mounted and dismounted to and from the load end stop.

Ideally, in use a load is mounted transverse the load carrying bar between the movable clamp and one of the load stop ends.

Preferably, the length of strapping is placed over the load and into the guide groove of the plate.

Ideally, a pulling force is imposed on the strapping causing movement of the movable clamp along the load carrying bar until the movable clamp engages the load.

Preferably, the free end of the strapping is fed through the ratchet means and a continued pulling force is applied to the strapping.

Ideally, the load is moved along the load carrying bar by the increased force being applied by the ratchet means until the load is clamped between the movable clamp and the load stop end.

Preferably, the load is secured by locking the strapping with the ratchet means.

The invention will now be described with reference to the accompanying drawings which shows by way of example only one embodiment of a roof rack in accordance with the invention. In the drawings:-
Figure 1 is a front view of a ratchet assembly and stop end plate of the roof rack;
Figure 2 is a side view of Figure 1;
Figure 3 is a plan view of Figure 1 and Figure 2;
Figure 4 is a top plan view of the roof rack of the present invention;
Figure 5 is a top plan view of a load carrying bar;
Figure 6 is an end view of a movable clamp mounted in the load carrying bar;
Figure 7 is an end view of the movable clamp;
Figure 8 Is a side view of the movable clamp;
Figure 9 is a hidden line view of the roof rack;
Figure 10 is a front elevational view of the stop end plate;
Figure 11 is a side view of Figure 10;
Figure 12 is a top plan view of Figures 10 and 11;
Figure 13 is a front elevational view of the mounting bracket;
Figure 14 is a side view of Figure 13;
Figure 15 is a top plan view of Figures 13 and 14;
Figure 16 Is a first perspective view of a second embodiment of load stop end in accordance with the invention;
Figure 17 is a second perspective view of the second embodiment of load stop end;
Figure 18 is a front elevation view of the second embodiment of load stop end; and
Figure 19 is a top plan view of the second embodiment of load stop end.

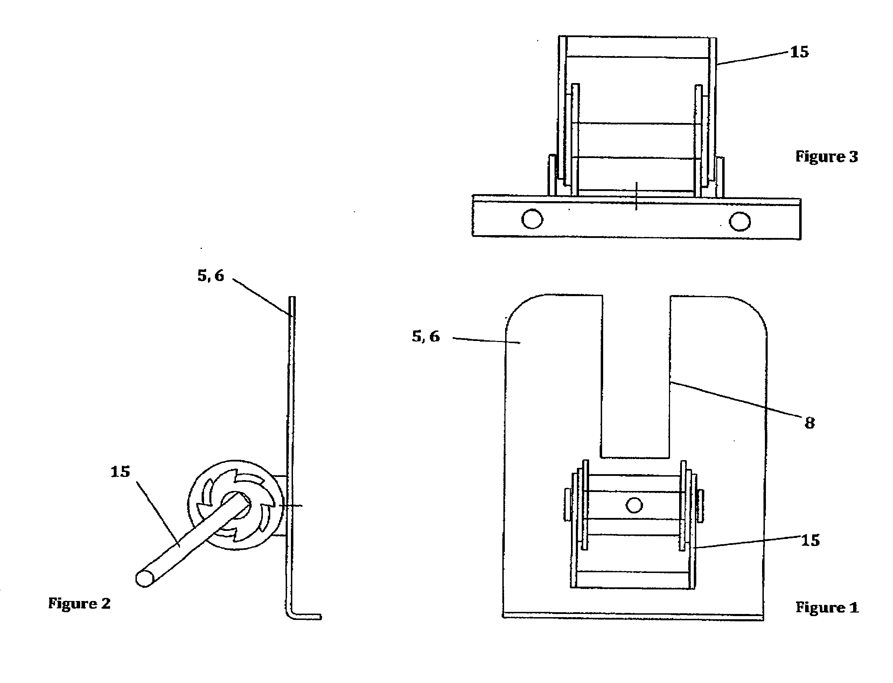

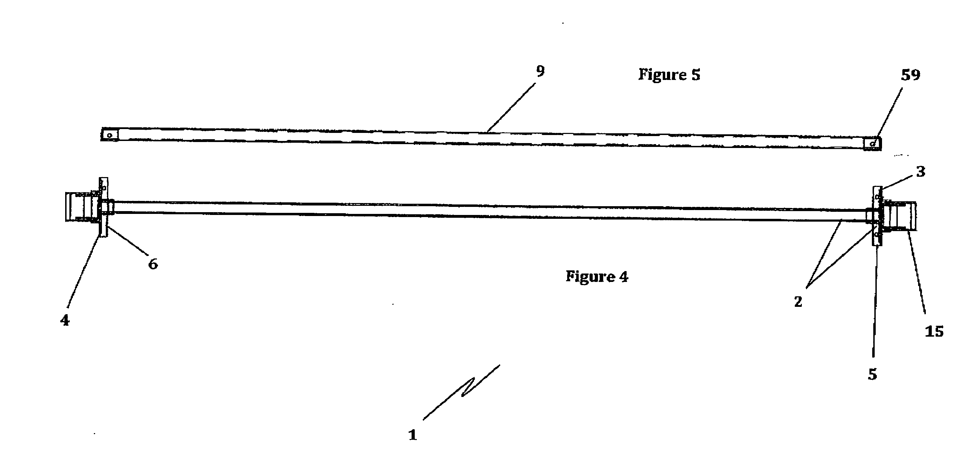

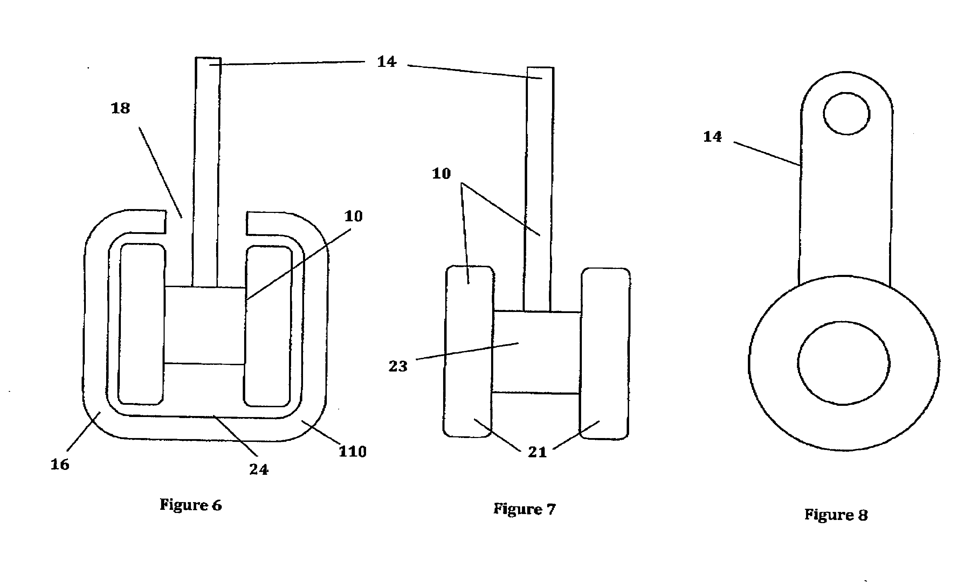

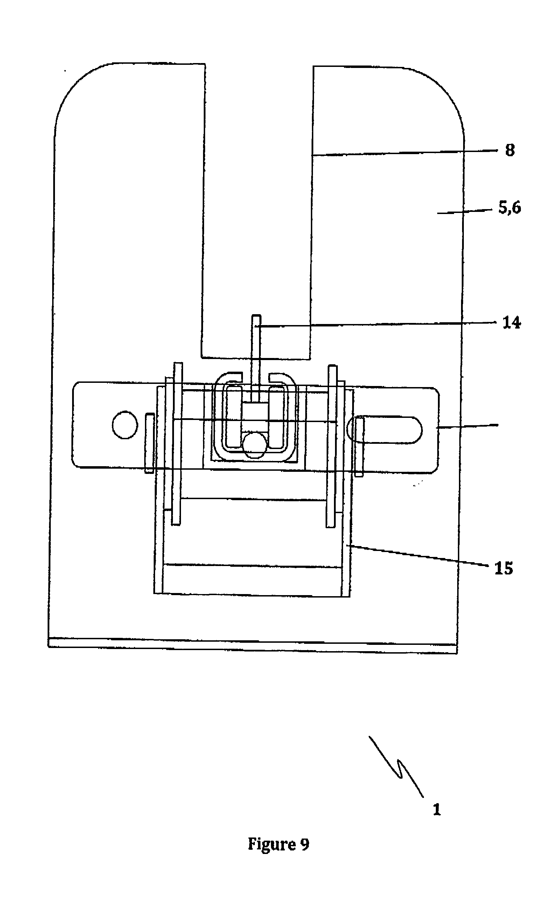

Referring to the drawings, and initially to Figures 1 to 9, there is shown an adjusting and securing arrangement indicated generally by the reference numeral 1 for adjusting and securing a load to the roof of a vehicle (not shown). The adjusting and securing arrangement 1 is operable by a single person and it has an elongate load securing device 2 see Figures 4 and 5 having a first end 3 and a second end 4 mounted on a vehicle in use. The first end 3 of the elongate load securing device 2 has a first load stop end 5 and a second end 4 of the elongate load securing device 2 has a second load stop end 6. At least one load stop end 5, 6 has an arrangement 8 for conveying a strap, not shown. The elongate load securing device 2 has a load carrying bar 9 extending between the load stop ends 5 and 6. The load carrying bar 9 has an arrangement 110 for conveying a movable clamp 10 laterally along the length of the load carrying bar 9. The movable clamp 10 is movably mounted on the load carrying bar 9. The movable clamp 10 has a connecting member 14 for connecting a length of strapping to the movable clamp 10. The load securing device 2 has an arrangement 15 for moving the clamp 10 along the load carrying bar 9 via a strap. Advantageously, the clamp moving arrangement 15 facilitates the load being moved and clamped between the movable clamp 10 and a stop end 5, 6.

Advantageously, the clamp 10 is freely movable laterally along the load carrying bar 9 so that the load can be clamped without any further mechanical adjustment other than simply pulling on the end of the strap which is coupled to the clamp 10. Two of the arrangements 1 for adjusting and securing a load onto a roof are spaced apart on the roof to support the load off the roof of the vehicle.

The arrangement 15 for moving the clamp 10 along the load carrying bar 9 is a ratchet 15 see especially Figures 1 to 3 fixed to at least one load stop end 5, 6. Advantageously, the mechanical advantage provided by the ratchet 15 allows heavy loads to be moved into a transport position by a single operator. A ratchet 15 is fixed to both load stop ends 5 and 6. Advantageously, this allows on operator to pull one load to one side of the load carrying bar 9 whilst allowing a second load to be pulled to the other side of the load carrying bar 9 to be securely clamped between clamp 10 and the load stop end 5, 6. Advantageously, the combination of a load stop end 5, 6 and the movable clamp 10 with the strapping attached between the movable clamp 10 and the ratchet 15 allows a load to be pulled along the load carrying bar 9 until it is secured between the movable clamp 10 and either load stop end 5, 6. The load can be pulled to either side of the load carrying bar 9 and a very heavy load can be pulled by a single user across the roof of the vehicle by the ratchet 15.

The movable clamp 10 is fixed on the load carrying bar 9 against vertical movement. In an embodiment, not shown, a pair of movable clamps 10 are movably mounted on the load carrying bar 9. The arrangement 110 for conveying the movable clamp 10 along the load carrying bar 9 is provided by a channel 16 formed by the walls of the bar 9. The channel 16 is a substantially box shaped channel 16 having an elongate opening 18 extending along the top surface of the box shaped channel 16. The movable clamp 10 has two wheels 21 mounted on an axle 23, the wheels being formed for running along the bottom internal surface 24 of the box shaped channel 16. Connecting member 14 extends from the axle 23 up through the elongate opening 18 protruding from the box shaped channel 16 for ease of connection with the strap.

The movable clamp 10 is fixed within the channel 16 of the load carrying bar 9 against vertical movement. Advantageously, any force applied to the movable clamp 10 will cause the clamp 10 to move laterally in the channel 16.

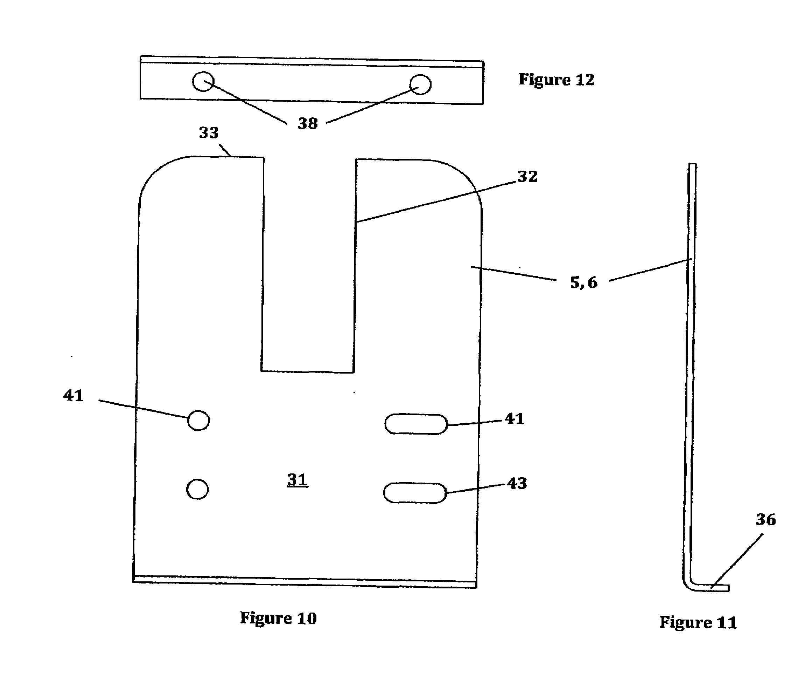

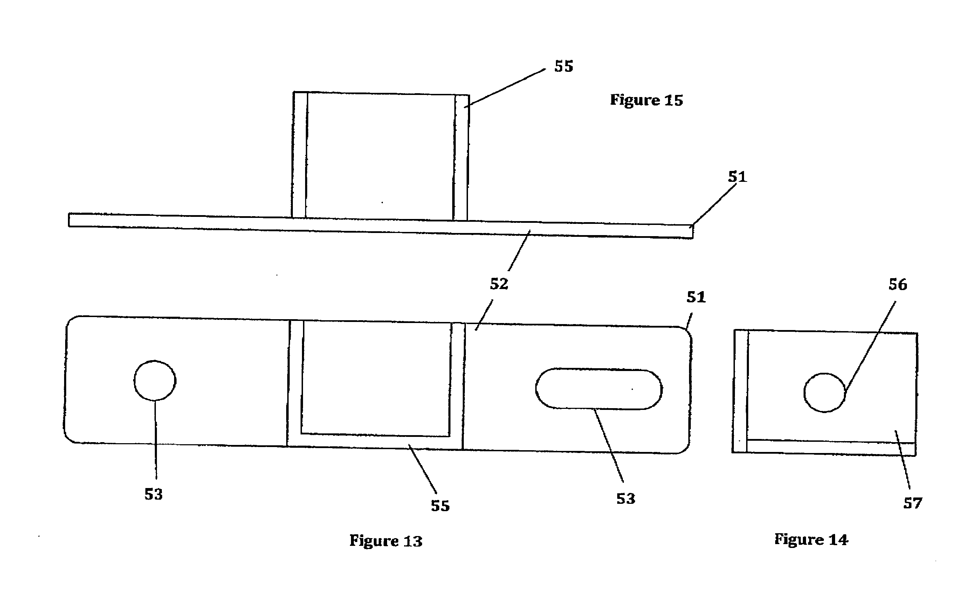

The load stop ends 5, 6 see especially Figures 10 to 12 have a plate 31 having a main plane substantially perpendicular to the longitudinal axis of the elongate load carrying bar 9. Each plate 31 has a groove 32 opening out of a top edge 33 of the plate 31, each groove 32 being dimensioned for slidably guiding a length of the strapping connected to the movable clamp 10 via the connecting member 14. The plates 31 have an L- shaped cross section in elevation with a short base leg 36. The short base leg 36 has a pair of apertures 38 for receiving fasteners for fixing the plates 31 to the roof of a vehicle. The upright leg 39 has a first pair of fixing apertures 41 formed for mechanically coupling the ratchet 15 onto the plate 31. A second pair of fixing apertures 43 formed for mechanically coupling a mounting bracket 51, see Figures 13 to 15 onto the plate 31 are formed in the plate 31 above the first pair of fixing apertures 41.

The mounting bracket 51, see Figures 13 to 15 has a backing support plate 52 formed for resting in a back to back arrangement with one main surface of the stop end plate 31. The backing support plate 52 has a pair of mounting bracket apertures 53 formed for alignment with the second pair of fixing apertures 43 in the stop end plate 31 for receiving fixing elements to mechanically couple the mounting bracket 51 to the stop end plate 31. A U shaped flange 55 protrudes substantially orthogonally from the mounting bracket 51 away from the ratchet 15 in use. The U-shaped flange 55 is formed for receiving the load supporting bar 9 and an aperture 56 is provided through a wall 57 of the u-shaped flange 55 to allow fasteners to couple the load supporting bar 9 via apertures 59 see Figure 5 onto the mounting bracket 51. The ratchet 15 is fixed proximal to the groove 32 in the plate 31. The ratchet 15 is provided by a standard ratchet arrangement commonly used for tightening straps over loads.

In use, a load is mounted transverse the load carrying bar 9 between the movable clamp 10 and one of the load stop ends 5, 6. The length of strapping is placed over the load and into the guide groove 32 of the plate 31. An operator applies a pulling force on the strapping causing movement of the movable clamp 10 along the load carrying bar 9 until the movable clamp 10 engages the load such as scaffolding planks or bars. The free end of the strapping is fed through the ratchet 15 and a continued pulling force is applied to the strapping via the ratchet 15. The load is moved along the load carrying bar 9 by the increased force being applied by the ratchet 15 until the load is clamped between the movable clamp 10 and the load stop end 5, 6. The load is secured to load securing device 2 by locking the strapping with the ratchet 15.

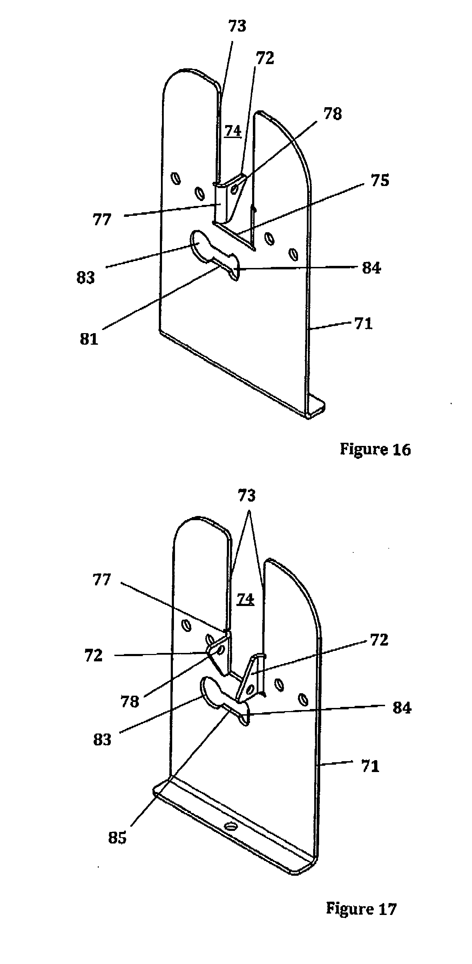

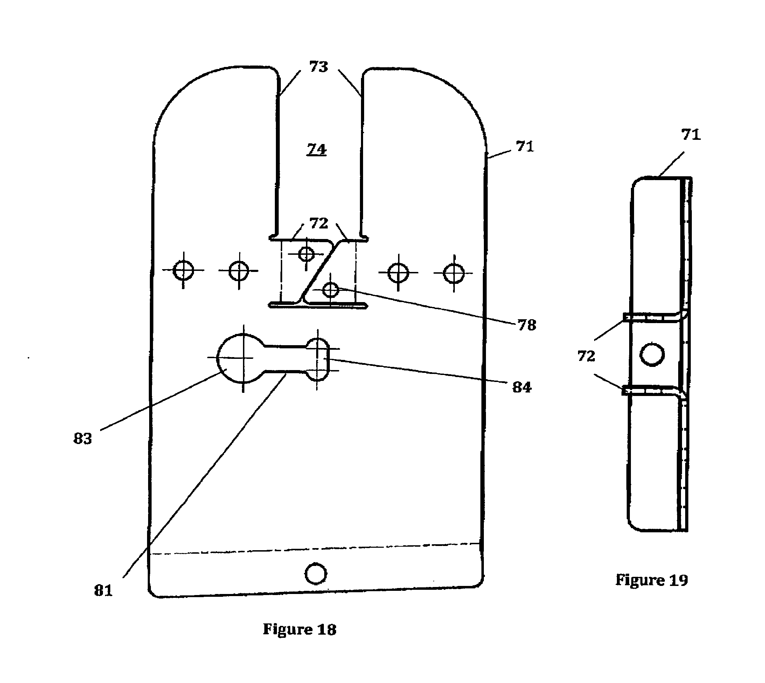

Referring to the drawings and now to Figures 16 to 19, the load stop end 71 has coupling members 72 for mechanically coupling the elongate load carrying bar 9 thereto. The coupling members 72 are a pair of tongues 72 protruding in the same direction from the main plane of the load stop end 71. Advantageously, the coupling members help with locating the elongate load carrying bar 9 in position on the load stop end 71. The coupling members 72 protrudes from both lateral edges 73 of the groove 74 proximal to the closed end 75 of the groove 74. The tongues 72 are generally triangular formations. Advantageously, the tongue formations 72 are cut out of the sheet of material forming the load stop end 71. The formations 72 are bent out of the main plane of the sheet along connecting portions 77 about the lateral edges 73 of the groove 74. The tongues 72 are a similar shape and size and have apertures 78 formed there through for receiving fasteners for mechanically coupling the end of the load carrying bar 9 to the load stop end 71.

The opposing triangular tongues 72 are inverted. Advantageously, the inversion of the triangular tongues 72 allows the wheels 21 of the movable clamp 10 to slide into and out of the load carrying bar 9 through the load stop end 71 as the non overlapping portions of the triangular formations 72 allow a small amount of lateral movement of the wheels 21 as they pass through the mutually opposing non overlapping triangular formations 72, otherwise the wheels 21 stick in this reduced width channel.

A further advantage of the inverted tongues/formations 72 is that a greater diameter of aperture 78 can be formed in the material of each formation 72 when it is in the shape of a triangle. Advantageously, this allows a larger diameter fastener to be used further enhancing the strength and rigidity of the mechanical coupling between load carrying bar 9 and load stop end 71 and which also prevents the load carrying bar 9 from rocking about.

The load stop end 71 has a slot formation 81 formed for receiving and locating a protruding quick attach and release coupling member (not shown) provided on the clamp moving arrangement 15. The slot formation 81 in the load stop end 71 has an expanded portion 83 at one end and a stud fastened to the ratchet having an expanded head are used to detachably couple the ratchet 15 to the load stop end 71. The expanded head of the stud is dimensioned so as to only fit through the expanded portion 83 of the slot formation 81. The slot formation 81 has a pair of spaced apart apertures 83, 84 connected by a slot 85. Advantageously, the expanded head of the stud can pass through the larger aperture 83 with the shaft of the stud being dimensioned to slide along the slot 85 between the two apertures 83, 84. The smaller aperture 84 of the slot formation 81 is located below the groove 74 so as to locate the ratchet 15 centrally of the groove 74. Advantageously, the ratchet 15 can be quickly mounted and released from the load stop end 71. Furthermore the smaller aperture 84 allows the stud with the expanded head sufficient play relative to the load stop end 71 so as to allow the ratchet 15 to align itself correctly into position on the load stop end 71 when an operator commences to apply force to the load via the ratchet mechanism 15.

In use, the expanded head of the stud is normally in engagement with the same side of the load stop end 71 that the protrusions extend from with the ratchet 15 urged into contact with the load stop end plate to secure the ratchet 15 onto the plate. During assembly or disassembly of the ratchet 15, the stud is slidable relative to the slot 85 so that the expanded head of the stud is brought into and away from alignment with the extended end 83 of the slot formation 81 to allow the ratchet 15 to be mounted and dismounted to and from the load stop end 71.

The features disclosed in the foregoing description or the following drawings, expressed In their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. An arrangement (1) for adjusting and securing a load to the roof of a vehicle, the arrangement (1) being operable by a single person and comprising an elongate load adjusting and securing means (2) having a first end (3) and a second end (4) mountable on a vehicle, one end (3, 4) of the elongate load adjusting and securing means (2) comprising a first load stop end (5, 6), the elongate load adjusting and securing means (2) comprising a load carrying member (9) extending between the two ends (3, 4), a movable clamp (10) movably mounted on the load carrying member (9), the movable clamp (10) having connecting means (14) for connecting towing means to the movable clamp (10), the load adjusting and securing means (2) having means for moving the clamp (10 along the load carrying member (9) via the towing means.

2. An arrangement (1) as claimed in claim 1, wherein the movable clamp (10) is freely movably mounted on the load carrying member (9).

3. An arrangement (1) as claimed in claim 1 or claim 2, wherein the load carrying member (9) has means (110) for conveying a movable clamp (10) laterally along the length of the load carrying member (9), the load carrying member (9) being a load carrying bar (9).

4. An arrangement (1) as claimed in any one of the preceding claims, wherein at least one load stop end (5, 6) having means (32) for conveying a towing means.

5. An arrangement (1) as claimed in any one of the preceding claims, wherein the towing means is provided by a strap, rope, cable or belt or any suitable elongate flexible means for coupling to the clamp (10).

6. An arrangement (1) as claimed in any one of the preceding claims, wherein two of the arrangements (1) for adjusting and securing a load onto a roof are mountable spaced apart on the roof to support the load off the roof of the vehicle.

7. An arrangement (1) as claimed in any one of claims 3 to 6, wherein the means (15) for moving the clamp (10) along the load carrying bar (9) is a ratchet means (15) fixed to at least one load stop end (5, 6).

8. An arrangement (1) as claimed in any one of claims 3 to 7, wherein the movable clamp (10) is fixed on the load carrying bar (9) against vertical movement.

9. An arrangement (1) as claimed in any one of claims 3 to 8, wherein the means for conveying the movable clamp (10) along the load carrying bar (9) is provided by a channel (16) running longitudinally along the length of the bar (9).

10. An arrangement (1) as claimed in claim 9, wherein the movable clamp has a wheel assembly (21, 23) formed for running along the bottom of the channel (16).

11. An arrangement (1) as claimed in any one of claims 3 to 10, wherein the stop end (71) has coupling means (72) for mechanically coupling the elongate load carrying bar (9) thereto, the coupling means (72) comprising a pair of inverted tongues (72) protruding in the same direction from the main plane of the load stop end (71).

12. An arrangement (1) as claimed in any one of the preceding claims, wherein the load stop end (71) has a groove (74) opening out of a top edge of the load stop end, the groove being dimensioned for slidably guiding a length of towing means.

13. An arrangement (1) as claimed in claim 12 and claim 11, wherein the coupling means (72) protrudes from both lateral edges (73) of the groove (74) proximal to the closed end of the groove.

14. An arrangement (1) as claimed in any one of the preceding claims, wherein the load stop end has a slot formation (81) formed for receiving and locating a protruding quick attach and release coupling member provided on the clamp moving means.

15. An arrangement as claimed in claim 14, wherein a slot formation in the load stop end having an expanded portion at one end and a stud fastened to the ratchet having an expanded head are provided, the slot formation comprising a pair of spaced apart apertures connected by a slot, the smaller aperture of the slot formation is located below the groove so as to locate the ratchet centrally of the groove.
